# EUROPEAN PATENT SPECIFICATION

(11) **EP 4 574 401 B1**
(45) Date of publication and mention of the grant of the patent: **29.07.2026**
(21) Application number: 23217984.6
(22) Date of filing: 19.12.2023
(51) Int. Cl.: B29C 65/14, B29C 65/16, B29L 31/30

(54) **TRANSMISSION WELDING APPARATUS AND WELDING METHOD**
TRANSMISSIONSCHWEISSVORRICHTUNG UND SCHWEISSVERFAHREN
APPAREIL DE SOUDAGE PAR TRANSMISSION ET PROCÉDÉ DE SOUDAGE

(43) Date of publication of application: 25.06.2025
(73) Proprietor: Airbus Operations GmbH, 21129 Hamburg (DE)
(72) Inventor: Vichniakov, Alexei, 21129 Hamburg (DE); von Delft, Fabrice Maurice, 21129 Hamburg (DE)
(74) Representative: Marschall, Stefan

(56) References cited:
- US-A1- 2005 039 855
- US-A1- 2013 025 793

## Description

The present invention concerns a transmission welding apparatus for welding thermoplastic resin material parts and a method for transmission welding thermoplastic resin material parts.

Transmission welding is a joining process by means of heat and pressure. Plastic material parts are joint by melting the interface between them and pressing them together. The heat is generated by laser radiation or infrared radiation. The pressure is applied via a transparent pressure plate driven by a pneumatic or hydraulic pressure generator. This process is well known for small parts. An exemplary welding method using infrared is described in the **EP-**patent application of the applicant EP 3 953 153 A1.

US 2013/025793 Al discloses a device for welding a first thermoplastic membrane to a second thermoplastic membrane, in which at least the first thermoplastic membrane or the second thermoplastic membrane is absorbent, said welding device comprising at least one die including a plurality of laser diodes for emitting a laser beam forming direct, simultaneous and uniform illumination on the illumination surface of the first thermoplastic membrane.

US 2005/039855 Al discloses an apparatus for connecting planar plastic materials by a laser transmission method, wherein a top material layer facing a laser source consists of a material which is transparent for the laser beam and a bottom material layer consists of a material which is absorbent for the laser beam, so that the contact surfaces adjoining one another of the two material layers fuse and combine with one another under pressure during the subsequent cooling, the apparatus comprises a processing head for accommodating guide devices for the laser beam and a device for transmitting the laser beam under the application of pressure to the material layers to be connected, wherein focussing means is arranged in the processing head and a rotatable roller which is transparent for the laser beam is arranged at the outlet end facing the material layers, the means comprises an integrated lens system, during the setting to the focus plane, interacting with the transparent roller, and the processing head having pressure devices for pressing the material layers together during the joining operation.

It is an object of the present invention to provide a transmission welding apparatus and applicable for welding large material parts and an adequate transmission welding method.

The object is achieved by a transmission welding apparatus with the features of claim 1, and by a transmission welding method with the features of claim 9. Advantageous embodiments are disclosed in the dependent claims, the description, and the drawings.

A transmission welding apparatus for welding thermoplastic resin material parts according to the invention comprises at least one heat source emitting thermal radiation and at least one pressure device adapted to apply a welding pressure on the material parts. The pressure device comprises at least one pressure generator for supplying a pressure force, at least one pressure plate which is permeable to the thermal radiation and which is adapted to introduce the pressure force into the material parts, and at least on pressure transmission system for transferring the pressure force to the pressure plate. At least one pressure plate is segmented into a plurality of plate segments which are arranged movable relative to one another.

According to the invention, a method for transmission welding thermoplastic resin material parts uses an inventive welding apparatus.

The segmentation of a large pressure plate in a plurality of small plate segments enables a transmission welding of large material parts. The pressure segments can follow individually a local contour of the material parts. The plate segments are located on the material parts to be joined and follow their upper surface during the entire welding cycle inclusive compensation of thermal extension as well as deformations during the welding process.

Splitting of a single pressure plates allows to perform the welding of the material parts with thickness variation in one short without changing or adaptation of the welding apparatus. This is very beneficial for welding with compensation of tolerances between the joined parts. Even curved material parts can be joint. Exemplary applications in the aircraft industry are the welding of stringers or doublers with ramps or thicknesses variation, of the stringers for fuselage, of for wing and empennage, of longitudinal joints, of circumferential joints, of components to bigger parts, e.g. for pressure bulk head, of movables or of frames. Exemplary heating sources are infrared lamps and halogen lamps emitting 1/3 of visible light and 2/3 of infrared light.

For instance, if convex or concave joints are processed, due to working space reasons, it can be advantageously if not every plate segment is pressure activated directly. For instance, the plate segments can be linked to another, this enabling a pressure activation of every second plate segment directly, whereas a plate segment between two active plate segments is moved passively via its rotational connection with the adjacent active plate segments.

In a preferred embodiment, plate segments are in operation connection with the same pressure generator. By means of this, only a single pressure generator is necessary.

In an alternative embodiment plate segments are in operation connection with an individual pressure generator. By means of this, the plate segment can be positioned in a very flexible manner to each other as they all have their own pressure generator.

An exemplary pressure transmission comprises rods and at least one gliding element of a pressure generator housing. The rods extend between the at least one gliding element and the plate segments.

Preferably, the rods are positioned on opposite edge portions of a plate segment thus avoiding a tilting of the plate segment when the pressure is applied.

In order to support the rods, guiding means for guiding the rods are provided.

The at least one heat source can be positioned between the rods. By means of this, the heat source is positioned close to the plate segments.

Preferably, the heat source has such a length that it extends over all plate segments. In one embodiment, two parallel heat sources are provided. In order to support the heat source at their end, sliding elements can be provided which carry the heat source and slide over the upper material part during welding.

In order to avoid that material parts areas which are adjacent to the welding area are heated up, at least one thermal protection element is provided.

In a preferred transmission welding method, a welding joint is made sequentially by moving the welding apparatus forward after a joint section is made. This enables the creating of joints which are longer than the transmission welding apparatus, in particular the extension of its plate segments in the direction of the joint.

In what follows, preferred embodiments of the present invention are explained with respect to the accompanying drawings. As is to be understood, the various elements and components are depicted as examples only, may be facultative and/or combined in a manner different than that depicted. Moreover, for conciseness reasons, components which evidently correspond to each other are not always described or referenced again for each figure. Shown is schematically in
- Figure 1 to 4:: different views of a first transmission welding apparatus according to the invention;
- Figure 5:: a longitudinal section view of a second transmission welding apparatus according to the invention;
- Figure 6 to 9:: different views of a third transmission welding apparatus according to the invention; and
- Figure 10 to 12:: different views of a fourth transmission welding apparatus according to the invention;

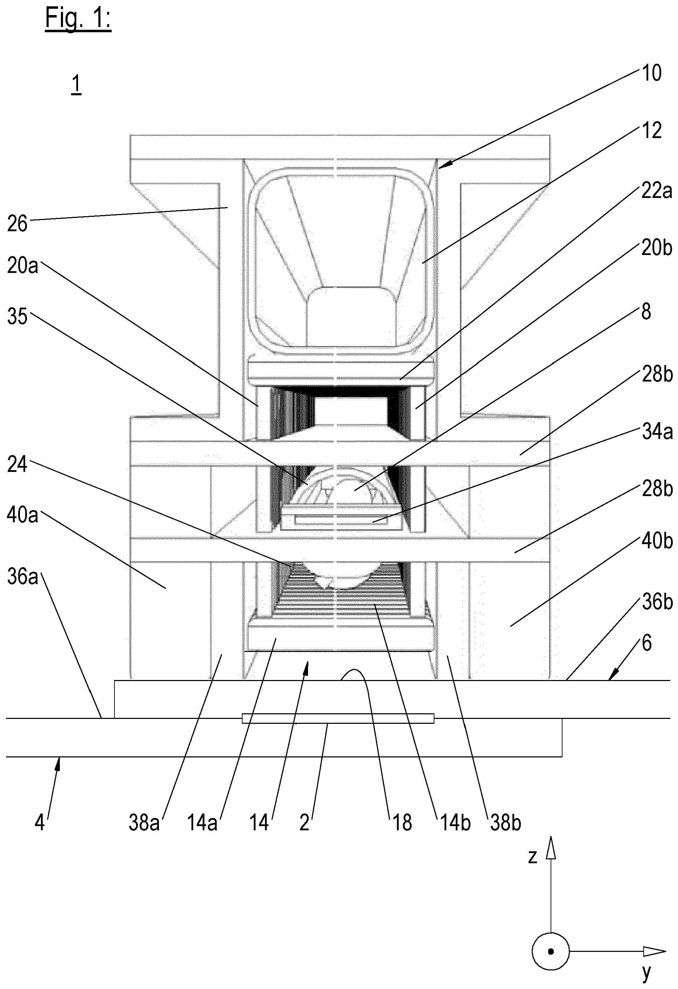

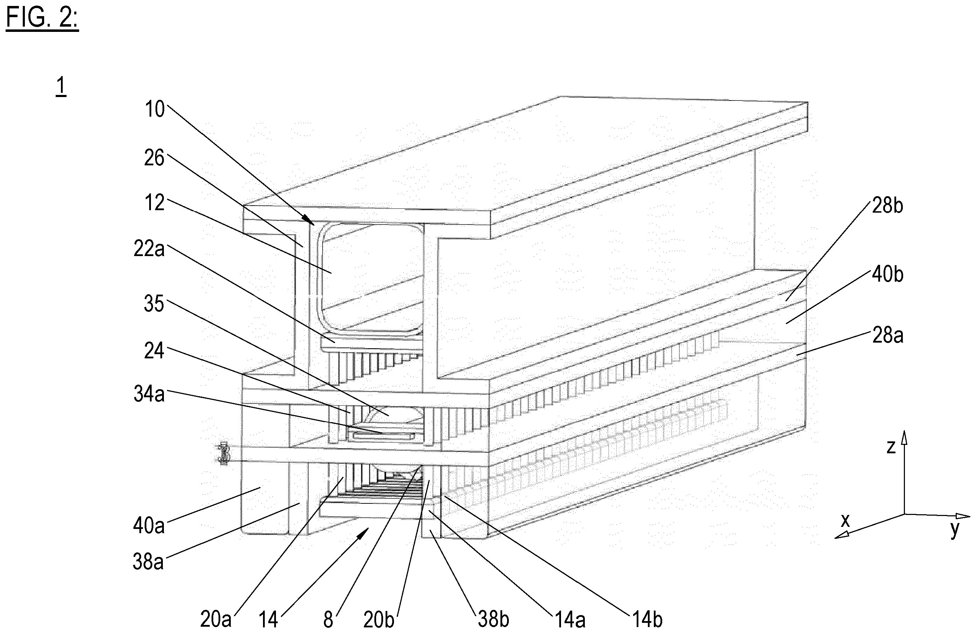

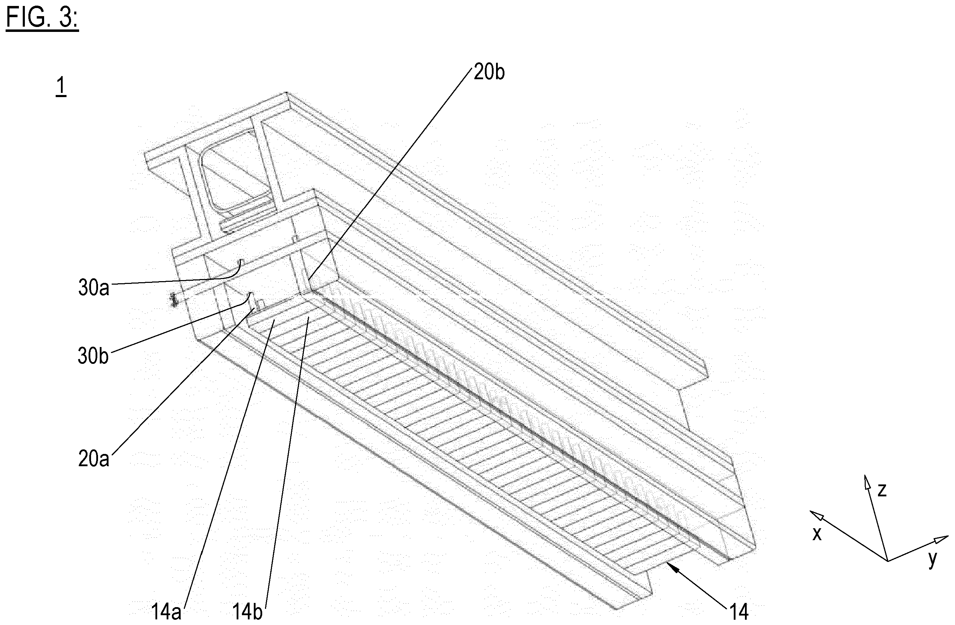

In Figures 1 to 4 a first embodiment of an inventive transmission welding apparatus 1 is shown. The apparatus 1 is used to create a joint 2 at an interface between two material parts 4, 6 via heat and pressure. Exemplary material parts 4, 6 are thermoplastic resin material parts, in particular fibre reinforced thermoplastic parts.

The apparatus 1 has a main extension in its moving direction, which is the longitudinal direction x of the joint 2. The apparatus 1 comprises one heat source 8 emitting thermal radiation, in particular infrared light, and one pressure device 10 adapted to apply a welding pressure on the material parts 4, 6. An exemplary heat source 8 is an infrared lamp or a halogen lamp.

The pressure device 10 comprises a pressure generator 12 for supplying a pressure force, a segmented pressure plate 14 which is adapted to introduce the pressure force into the material parts 4, 6, and one pressure transmission system 16 for transferring the pressure force to the segmented pressure plate 14.

The segmented pressure plate 14 is split into a plurality of plate segments 18. The plate segments 14a, 14b are arranged adjacent to another in longitudinal direction x and are in operation connection with the pressure generator 12 via the pressure transmission system 16. They are movable relative to one another in vertical direction z. They are made of a material that is permeable to thermal radiation such as transparent glass. They have a greater extension in a direction perpendicular to the joint 2 to be made (horizontal direction y) than in longitudinal direction x.

The pressure transmission system 16 comprises several rods 20a, 20b and at least one gliding element 22a, 22b. Here, for each plate segment 14a, 14b one gliding element 22a, 22b is provided. The rods 20a, 20b extend between the gliding elements 22 and the respective plate segment 14a, 14b in vertical direction z. Each plate segment is in operation connection with two rods 20a, 20b (pair of rods). The rods 20a, 20b of one pair are positioned on opposite edge portions of a plate segment 14a, 14b. The pair of rods 20a, 20b are aligned in a row in longitudinal direction x. Thereby a longitudinal space 24 (channel) between the opposite rod rows is created in which the heat source 8 is positioned.

The gliding elements 22a, 22b are cross beams forming a movable bottom of a pressure generator housing 26. They are movable in vertical direction z by pressure application.

Further on, the pressure transmission system comprises guiding means 28a, 28b for supporting the rods 20a, 20b, in particular when pressure is applied in order to avoid tilting of them. Here, the guiding means 28a, 28b are longitudinal plates which extend over the entire length of the apparatus 1. They fixed laterally in different heights and have a plurality of through-holes 30a, 30b in which the rods 20a, 20b are guided. Thus, as they are provided in a vertical distance to another, each rod 20a, 20b is radially guided at two vertical positions.

The pressure generator 12 comprises a longitudinal pneumatic pressure tube that extends over the entire length of the apparatus 1. The pressure tube 12 is positioned in the pressure generator housing 26 that enables via its movable bottom (gliding elements 22a, 22b) a spatial expansion of the pressure tube 12 only in a lower vertical direction z.

The heat source 8 has a cylindrical shape and extends over all plate segments 14a, 14b in longitudinal direction x. The heat source 8 is fixed inside the channel 24 (space between the opposite rods) and carried by two holding elements 34 at its end inside the welding apparatus 1. Here, the holding elements 34 are attached to the lower guiding means 28a. In order to concentrate the thermal radiation to the plate segments 14a, 14b, above the heat source 8 a concave shielding 35 is positioned extending over the entire length of the plate segments 14a, 14b.

In order to avoid a heating up of material part areas 36a, 36b adjacent to a welding area 18, in longitudinal direction x on both sides thermal protection elements 38a, 38b are provided. The thermal protection elements 38a, 38b are positioned laterally to the heat source 8 and the plate segments 14a, 14b in an area between the lower guiding means 28a and the material parts 4, 6.

In order to carry the transmission welding apparatus 1 in a position, when the plate segments 14a, 14b are depressurised, side walls 40a, 40b are provided. On the side walls 40a, 40b the pressure generator housing 26 rests. The guiding means 28a, 28b are also rests on the side walls 40a, 40b, wherein the lower guiding means 28a divide each side wall 40a, 40b in two longitudinal side wall elements.

In order to create the joint 2, the transmission welding apparatus 1 is moved forward in longitudinal direction x under the application of heat and pressure. During the welding process, the plate segments 14a, 14b are pressed down. When a joint portion (sequence) is made, the pressure is reduced and the welding apparatus 1 is moved forward. Then, the pressure arises again and a next joint sequence is done.

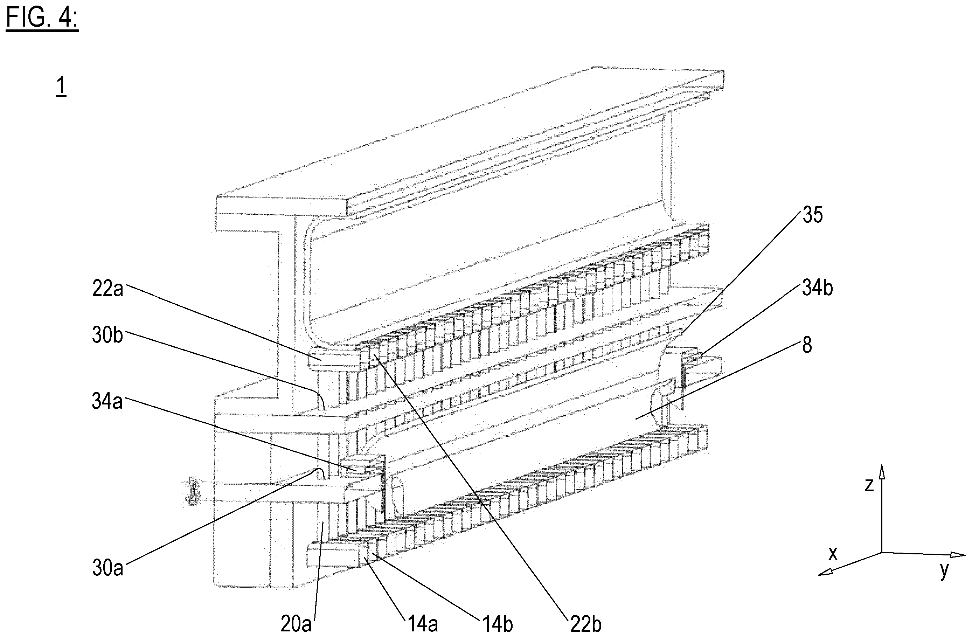

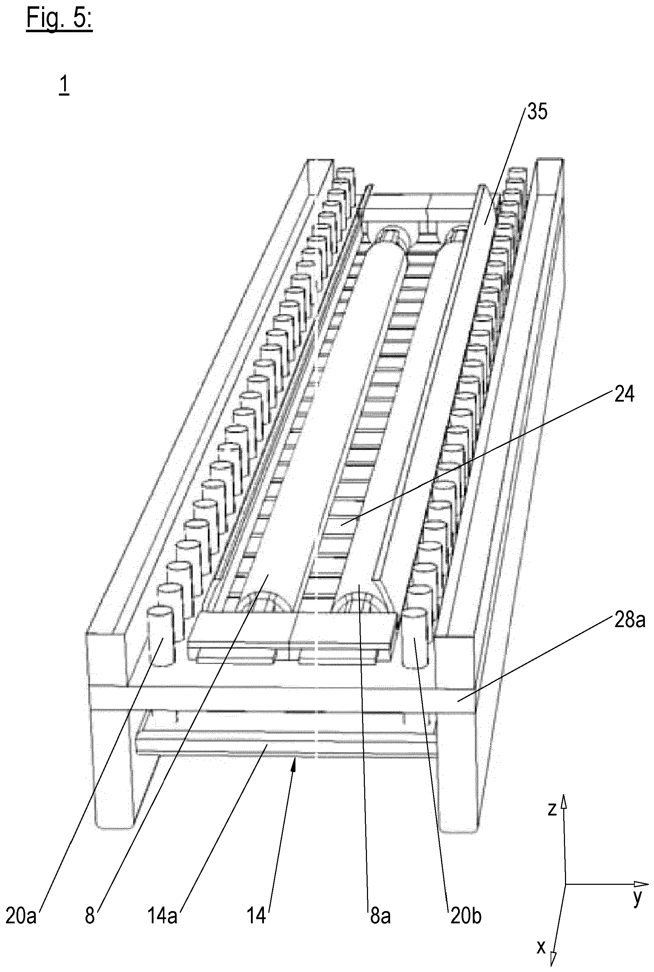

In Figure 5 a second embodiment of an inventive transmission welding apparatus 1 shown. Contrary to the first welding apparatus 1 according to Figures 1 and 4, the second embodiment has two heat sources 8, 8a. The heat sources 8, 8a are of the same type and run parallel inside the channel 24 between the row of rods 20a, 20b. A concave shielding 35 extends over both heat sources 8, 8a.

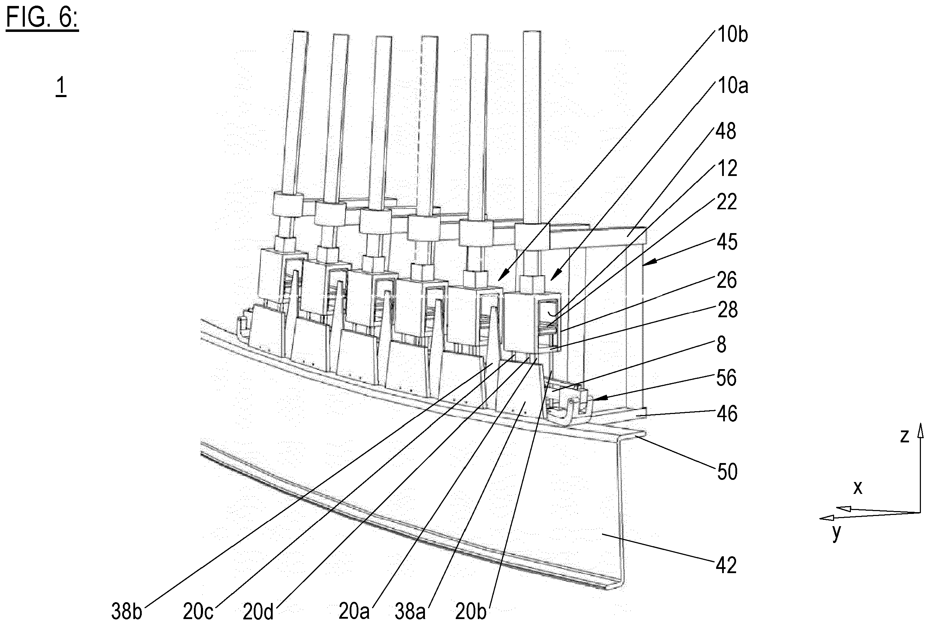

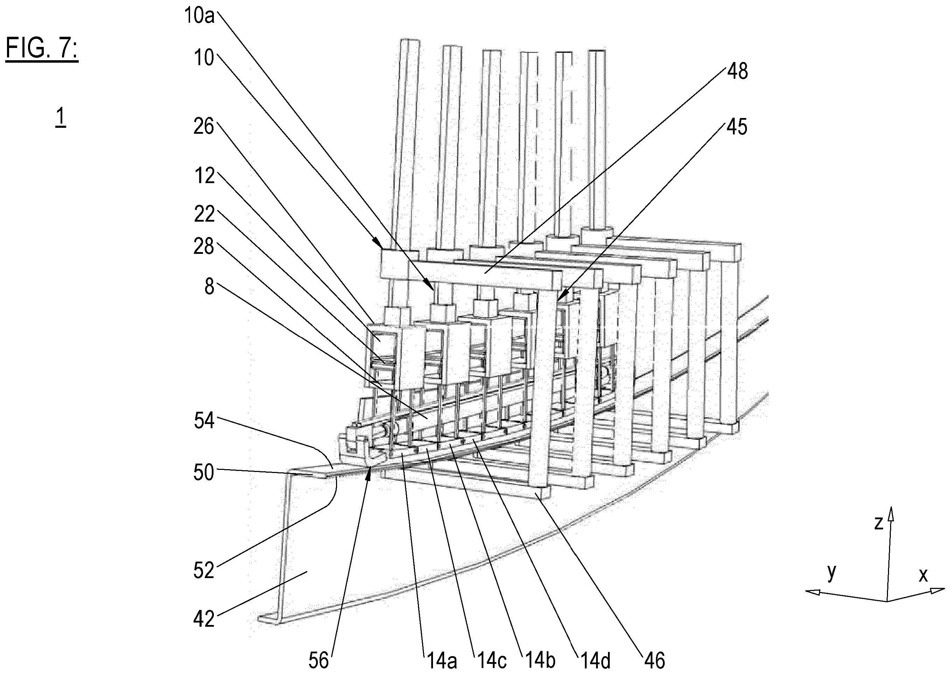

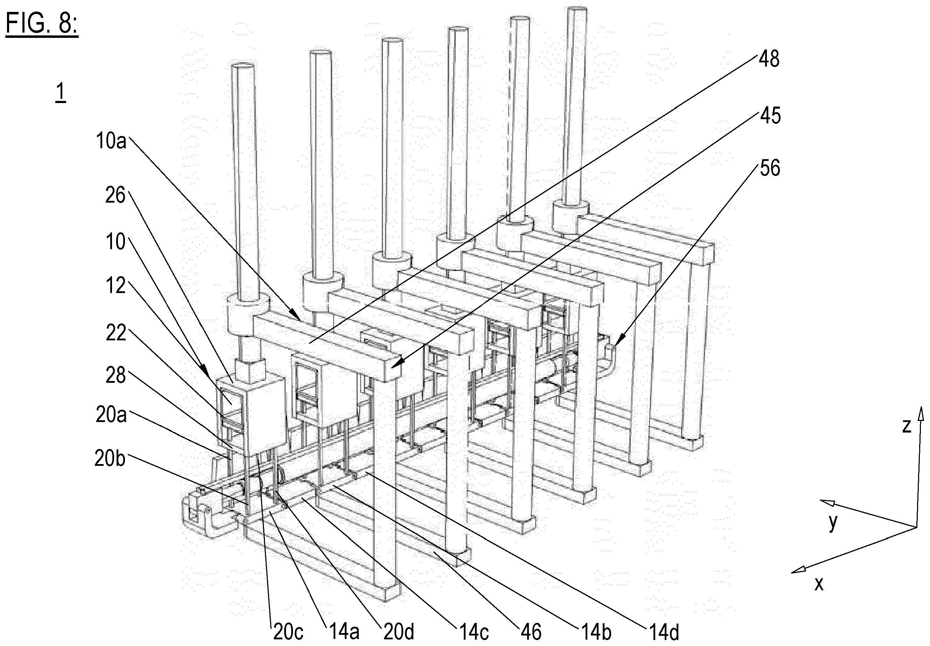

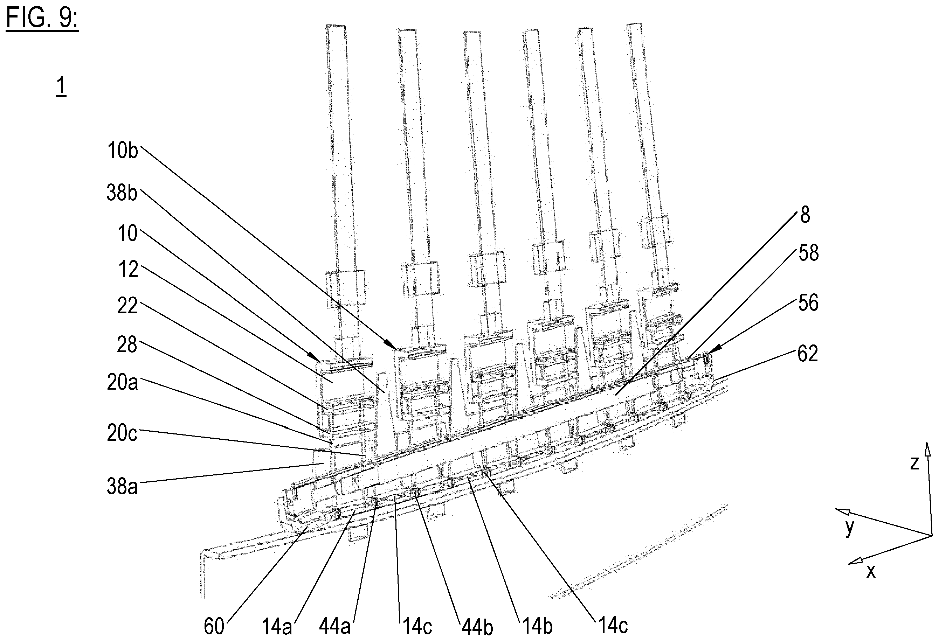

In Figures 6 to 9 a third embodiment of an inventive transmission welding apparatus 1 is shown. The third embodiment 1 is adapted to create convex or concave joints, known from aircraft frames 42, for instance.

It comprises a plurality of pressure devices 10, 10a, each being in operation connection with one plate segment 14a, 14b of a segmented large pressure plate 14. The large pressure plate 14 extends in longitudinal direction x and has linked plate segments 14a, 14b, 14c, 14d. Thereby, only every second plate segment 14a, 14b is pressure activated directly via rods 20a, 20b, 20c, 20d (active plate segments). Plate segments 14c, 14d between these active plate segments 14a, 14b are linked with them via rotational joints 44a, 44b and are being moved passively (passive plate segments). Each rotational joint 44a, 44b enables a rotational movement around a horizontal axis. Both active and passive plate segments 14a, 14b, 14c, 14d are made of a transparent material permeable to infrared radiation. Further on, here four rods 20a, 20b, 20c, 20d per active plate segment 14a, 14b are provided, only one guiding means 28 and one gliding element 22 as movable bottom of a pressure generator housing 26 driven by a pressure generator such as a pressure tube 12.

Each pressure device 10, 10a is positioned in a single holding frame 45. Each holding frame 45 has two parallel legs 46, 48, which extend in horizontal direction y. The lower leg 46 is used as a counterbearing adapted to be positioned on a lower side 48 of a flange 50 to be processed. The upper leg 48 is used to guide and carry the pressure device 10, 10a on an upper side 52 of the flange 50 to be processed in vertical direction z.

A single heat source 8 is positioned in a channel 24 between the row of rods 20a to 20d and extends over the entire length of the welding apparatus 1 and thus over the entire segmented pressure plate 14. The heat source 8 has a cylindrical shape and is positioned in a separate carrier 56. The carrier 56 has a longitudinal beam 58 which is pivotable supported in a front slide 60 and in a rear slide 62 in order to balance the convex or concave curvature of the material parts 4, 6. Both pivotable joints enable a rotational movement around a horizontal axis. During welding, the slides 60, 62 are laid on the upper flange side 54 via their underside. The heat source 8 is also supported pivotable in the slides 60, 62.

Further on, a thermal radiation shielding 35 is provided and a thermal protection element 38a which is split in several parts 38c, 38d according to the pressure devices 10, 10b. Between the pressure devices 10, 10b, the thermal protection parts 38d are extended in vertical direction z, thus minimizing gaps between their adjacent pressure generator housings 26, 26a.

In order to create a transmission welded joint 2, the transmission welding apparatus 1 is moved forward in longitudinal direction x under the application of heat and pressure. During the welding process, the plate segments 14a to 14d are pressed down. When a joint portion (sequence) is made, the pressure is reduced and the welding apparatus 1 is moved forward. Then, the pressure arises again and a next joint sequence is done.

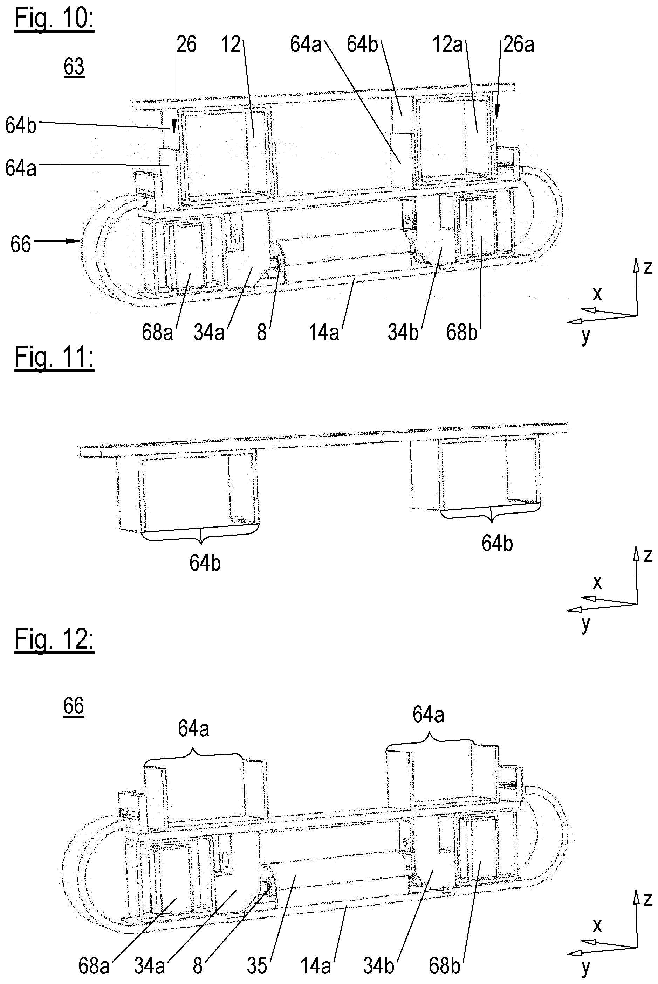

In Figures 10 to 12 a unit 63 of a fourth embodiment of an inventive transmission welding apparatus 1 is shown. The fourth embodiment 1 comprises multiple units 63, wherein each unit 36 has one pressure plate segments 14a which is moved by two pressure generators 12, 12a. Further on, a pressure transmission system 16 without rods is provided. Furthermore, each plate segment 14a is equipped with an own heat source 8.

Each pressure generator 12, 12a has a pressure generator housing 26, 26a which is split in a lower half 64a and in an upper half 64b. The lower half 64a is supported by a slide 66 carrying the plate segment 14 and the heat source 8. Inside each generator housing 26, 26a a pneumatic pressure tube 12, 12a is provided. When the pressure tubes 12, 12a expands, the lower half 64a is moved downwards and a welding pressure is applied to the slide 66 on the plate segment 14a.

The heat source is orientated perpendicular to the moving direction x of the transmission welding apparatus 1. Thus, the heating source 8 is orientated in horizontal direction y. The heating source 8 is fixed in holding elements 34a, 34b at its end inside the slide 66 above the respective plate segment.

In order to optimize the welding process, laterally to the plate segment 14a two vibration element 68a, 68b can be provided in the slide 66.

In order to create a transmission welded joint, several units 63 are arranged adjacent to another in longitudinal direction x to one welding apparatus 1 and then moved forward under heat, pressure and vibration application. During the welding process, the plate segments 14a are pressed down. When a joint portion (sequence) is made, the pressure is reduced and the welding apparatus is moved forward. Then, the pressure arises again and a next joint sequence is done.

It should be noted that regarding all embodiments, the entire joint can also be done in one step and not sequentially in several steps. This depends on the size of the joint, on the size of the transmission welding apparatus and on the contour of the parts to be welded. Welding the material parts in one step can be advantage if the material parts have very complex contours as then every single plate segment can be adapted perfectly with its lower pressing surface perfectly to a respective very complex area.

Disclosed are a transmission welding apparatus for welding thermoplastic resin material parts, wherein a pressure plate is segmented into a plurality of plate segments which are arranged movable relative to one another, and a welding method.

### References

- 1: transmission welding apparatus / apparatus
- 2: joint
- 4: material part
- 6: material part
- 8, a: heat source
- 10, a: pressure device
- 12, a: pressure generator / pressure tube
- 14: segmented pressure plate
- 16: pressure transmission system
- 14a, b: plate segment (active)
- 14c, d: plate segment (passive)
- 18: welding area
- 20a, b: rod
- 22, a, b: gliding element
- 24: channel
- 26, a: pressure generator housing
- 28, a, b: guiding means
- 30a, b: through-hole
- 34a, b: holding element
- 35: shielding
- 36a, b: material part area
- 38a, b: thermal protection element
- 40a, b: side wall
- 42: frame
- 44a, b: rotational joint
- 45: holding frame
- 46: lower leg
- 48: upper leg
- 50: flange
- 52: lower side
- 54: upper side
- 56: carrier
- 58: longitudinal beam
- 60: front slide
- 62: rear slide
- 63: unit
- 64a: lower half of generator housing
- 64b: upper half of generator housing
- 66: slide
- 68, b: vibration element

- x: longitudinal direction
- y: horizontal direction
- z: vertical direction

## Claims

1. A transmission welding apparatus (1) for welding thermoplastic resin material parts (4, 6), comprising:
∘ at least one heat source (8, 8a) emitting thermal radiation;
∘ at least one pressure device (10, 10a) adapted to apply a welding pressure on the material parts, comprising
▪ at least one pressure generator (12, 12a) for supplying a pressure force;
▪ at least one pressure plate (14) which is permeable to the thermal radiation and which is adapted to introduce the pressure force into the material parts; and
▪ at least one pressure transmission (16) system for transferring the pressure force to the pressure plate (14);
wherein the at least one pressure plate (14) is segmented into a plurality of plate segments (14a, 14b, 14c, 14d) which are arranged movable relative to one another,
**characterised in that**, the plate segments (14a, 14b, 14c, 14d) are rotationally linked with another.

2. The transmission welding apparatus (1) according to claim 1, wherein plate segments (14a, 14b, 14c, 14d) are in operation connection with the same pressure generator (12) or with individual pressure generators (12, 12a).

3. The transmission welding apparatus (1) according to claims 1 or 2, wherein the at least one pressure transmission comprises rods (20a, 20b, 20c, 20d) and at least one gliding element (22, 22a, 22b) of a pressure generator housing (26), wherein the rods (20a, 20b, 20c, 20d) extend between the at least one gliding element and the plate segments (14a, 14b, 14c, 14d).

4. The transmission welding apparatus (1) according to claim 3, wherein guiding means (28, 28a, 28b) are provided adapted for guiding the rods (20a, 20b, 20c, 20d).

5. The transmission welding apparatus (1) according to claim 4, wherein the at least one heat source (8, 8a) is positioned between the rods (20a, 20b, 20c, 20d).

6. The transmission welding apparatus (1) according to claim 4, wherein the heat source (8, 8a) extends over all plate segments (14a, 14b, 14c, 14d).

7. The transmission welding apparatus (1) according to any of the preceding claims, wherein in moving direction of the transmission welding apparatus (1) at least one thermal protection element (38a, 38b) is provided.

8. A method for transmission welding thermoplastic resin material parts (4, 6), using a transmission welding apparatus (1) according to any of the preceding claims.

9. The method according to claim 8, wherein a welding joint (2) is made sequentially by moving the transmission welding apparatus , (1) forward after a joint section is made.

## Patentansprüche

1. Transmissionsschweißvorrichtung (1) zum Schweißen von Teilen (4, 6) aus thermoplastischem Kunststoff, umfassend:
• mindestens eine Wärmequelle (8, 8a), die Wärmestrahlung abgibt;
• mindestens eine Druckvorrichtung (10, 10a), die dazu ausgelegt ist, einen Schweißdruck auf die Materialteile auszuüben, umfassend
∘ mindestens einen Druckgenerator (12, 12a) zur Bereitstellung einer Druckkraft;
∘ mindestens eine Druckplatte (14), die für die Wärmestrahlung durchlässig ist und dazu ausgelegt ist, die Druckkraft in die Materialteile einzuleiten; und
∘ mindestens ein Druckübertragungssystem (16) zur Übertragung der Druckkraft auf die Druckplatte (14);
wobei die mindestens eine Druckplatte (14) in eine Vielzahl von Plattensegmenten (14a, 14b, 14c, 14d) unterteilt ist, die relativ zueinander beweglich angeordnet sind, **dadurch gekennzeichnet, dass** die Plattensegmente (14a, 14b, 14c, 14d) drehbar miteinander verbunden sind.

2. Transmissionsschweißvorrichtung (1) nach Anspruch 1, wobei Plattensegmente (14a, 14b, 14c, 14d) in Funktionsverbindung mit demselben Druckerzeuger (12) oder mit einzelnen Druckerzeugern (12, 12a) stehen.

3. Transmissionsschweißvorrichtung nach Anspruch 1 oder 2, wobei die mindestens eine Druckübertragung Stangen (20a, 20b, 20c, 20d) und mindestens ein Gleitelement (22, 22a, 22b) eines Druckgeneratorgehäuses (26) umfasst, wobei sich die Stangen (20a, 20b, 20c, 20d) zwischen dem mindestens einen Gleitelement und den Plattensegmenten (14a, 14b, 14c, 14d) erstrecken.

4. Transmissionsschweißvorrichtung nach Anspruch 3, wobei Führungsmittel (28, 28a, 28b) vorgesehen sind, die zum Führen der Stäbe (20a, 20b, 20c, 20d) eingerichtet sind.

5. Transmissionsschweißvorrichtung nach Anspruch 4, wobei die mindestens eine Wärmequelle (8, 8a) zwischen den Stäben (20a, 20b, 20c, 20d) angeordnet ist.

6. Transmissionsschweißvorrichtung nach Anspruch 4, wobei sich die Wärmequelle (8, 8a) über alle Plattensegmente (14a, 14b, 14c, 14d) erstreckt.

7. Transmissionsschweißvorrichtung nach einem der vorstehenden Ansprüche, wobei in Bewegungsrichtung der Transmissionsschweißvorrichtung (1) mindestens ein Wärmeschutzelement (38a, 38b) vorgesehen ist.

8. Verfahren zum Transmissionsschweißen von Bauteilen (4, 6) aus thermoplastischem Kunststoff unter Verwendung einer Transmissionsschweißvorrichtung (1) gemäß einem der vorstehenden Ansprüche.

9. Verfahren nach Anspruch 8, wobei eine Schweißverbindung (2) nacheinander hergestellt wird, indem die Transmissionsschweißvorrichtung (1) nach der Herstellung eines Verbindungsabschnitts vorwärts bewegt wird.

## Revendications

1. Appareil de soudage par transmission (1) destiné au soudage de pièces (4, 6) en résine thermoplastique, comprenant:
• au moins une source de chaleur (8, 8a) émettant un rayonnement thermique;
• au moins un dispositif de pression (10, 10a) adapté pour appliquer une pression de soudage sur les pièces, comprenant
∘ au moins un générateur de pression (12, 12a) destiné à fournir une force de pression;
∘ au moins une plaque de pression (14) qui est perméable au rayonnement thermique et qui est adaptée pour transmettre la force de pression aux pièces en matière; et
∘ au moins un système de transmission de pression (16) destiné à transférer la force de pression à la plaque de pression (14);
dans lequel la au moins une plaque de pression (14) est segmentée en une pluralité de segments de plaque (14a, 14b, 14c, 14d) qui sont agencés de manière à pouvoir se déplacer les uns par rapport aux autres, **caractérisé en ce que** les segments de plaque (14a, 14b, 14c, 14d) sont reliés entre eux de manière à pouvoir tourner.

2. Dispositif de soudage à transmission (1) selon la revendication 1, dans lequel des segments de plaque (14a, 14b, 14c, 14d) sont reliés, en fonctionnement, au même générateur de pression (12) ou à des générateurs de pression individuels (12, 12a).

3. Dispositif de soudage par transmission (1) selon les revendications 1 ou 2, dans lequel la au moins une transmission de pression comprend des barres (20a, 20b, 20c, 20d) et au moins un élément coulissant (22, 22a, 22b) d'un boîtier de générateur de pression (26), les barres (20a, 20b, 20c, 20d) s'étendant entre ledit au moins un élément coulissant et les segments de plaque (14a, 14b, 14c, 14d).

4. Appareil de soudage par transmission (1) selon la revendication 3, dans lequel des moyens de guidage (28, 28a, 28b) sont prévus pour guider les barres (20a, 20b, 20c, 20d).

5. Appareil de soudage par transmission (1) selon la revendication 4, dans lequel la au moins une source de chaleur (8, 8a) est positionnée entre les barres (20a, 20b, 20c, 20d).

6. Appareil de soudage de transmission (1) selon la revendication 4, dans lequel la source de chaleur (8, 8a) s'étend sur l'ensemble des segments de plaque (14a, 14b, 14c, 14d).

7. Appareil de soudage par transmission (1) selon l'une quelconque des revendications précédentes, dans lequel au moins un élément de protection thermique (38a, 38b) est prévu dans le sens de déplacement de l'appareil de soudage par transmission (1).

8. Procédé de soudage par transmission de pièces (4, 6) en résine thermoplastique, utilisant un appareil de soudage par transmission (1) selon l'une quelconque des revendications précédentes.

9. Procédé selon la revendication 8, dans lequel un joint de soudure (2) est réalisé de manière séquentielle en faisant avancer l'appareil de soudage par transmission (1) après la réalisation d'une section de joint.
